# EUROPEAN PATENT SPECIFICATION

(11) **EP 1 852 363 B1**
(45) Date of publication and mention of the grant of the patent: **21.09.2011**
(21) Application number: 06009199.8
(22) Date of filing: 04.05.2006
(51) Int. Cl.: B65D 75/58, B65D 83/08

(54) **Wet tissue packing**
Verpackung für feuchte Papiertücher
Emballage de serviettes humides

(43) Date of publication of application: 07.11.2007
(73) Proprietor: Nordenia Iberica Barcelona SA, 08213 Polinya (Barcelona) (ES)
(72) Inventor: Torres Santini, Luis Alberto, 08210 Barbera del Valles (Barcelona) (ES)
(74) Representative: Albrecht, Rainer Harald

(56) References cited:
- EP-A- 0 968 934
- FR-A- 2 376 802
- US-A- 4 185 754
- US-A- 5 938 013
- US-A1- 2004 065 408

## Description

The invention relates to wet tissue packing used for wet tissues consisting of a multilayer printed film adapted to form a sealed bag, the inside surfaces of the bag being formed from a sealing layer of the film and the outside surface of the bag being formed form an imprintable outer layer of the film, whereby at least portions of the outer layer are imprinted. Such a wet tissue bag is known form EP 0 968 934 A1.

Typically wet tissues are arranged in a tightly sealed bag either folded flat and stacked on top of each other or arranged as a roll, from which tissues can be torn off individually. Due to the imprint on the wet tissue packing the film can be graphically designed or be provided with product information. Typically wet tissues are wetted with, or soaked in, a solution and are, for example, offered as wet tissues for babies, cleaning tissues, hygiene tissues or freshening tissues.

Wet tissue packing for wet tissues exhibiting the features mentioned above is well known in practice, whereby layers of film made from polyethyleneterephthalate (PET) and polyethylene (PE) or biaxially orientated polypropylene (BOPP) and polyethylene (PE) are laminated to form a compound film using a polyurethane-based adhesive. The migration of the constituents of the solution with which the wet tissues are wetted or soaked, may cause the laminating adhesive and the imprint inside the compound film to decompose. This can lead, in particular, to undesired delaminating of the compound film and fading of the printing ink. These undesired effects are particularly noticeable if a tear-open tissue removal zone is provided, which is surrounded by a weakening line and covered by an adhesive film for resealing. Substances which have penetrated into the film of the bag in the area of a weakening line are prevented from escaping easily by the adhesive film acting as barrier and are stored in the pressure sensitive adhesive of the adhesive film, so that decomposition of the laminating adhesive and the change in the printing ink are particularly noticeable. Moreover the laminating process is very laborious. Further processing of the compound film cannot take place, until the laminating adhesive has hardened.

Against this background the invention is based on the requirement to specify a wet tissue packing for wet tissues exhibiting the features mentioned in the beginning which can be easily manufactured and is durable.

The problem is solved by a wet tissue packaging comprising the features of claim 1.

According to the invention the requirement is met in that the film is formed as a co-extrusion film, whereby the inside surface of the bag is formed from a sealing layer of the co-extrusion film and the outside surface of the bag is formed from an imprintable outer layer of the co-extrusion film, and whereby at least portions of the outer layer are imprinted and the outer layer is provided with a protective lacquer. Typically the bag is formed from a folded film portion or by two sheets of film and preferably tightly sealed by sealing seams. By using a co-extrusion film good durability of the wet tissue packing is ensured, whereby manufacture of the co-extrusion film is inexpensive and can be achieved by means of a simple process. The outer layer of the co-extrusion film which forms the outside surface of the bag is provided with an imprint. At least the imprinted areas of the outside surface of the bag are covered by a thin protective lacquer which preferably exhibits high chemical and mechanical resistance and protects the imprinted areas. Depending on the choice of protective lacquer the outside surface of the bag may be finished in mat or gloss, and may be different for portions thereof.

Within the framework of the invention protective lacquers which harden reactively are particularly suitable. In contrast to adhesives which are soluble in water or solvents, reactively hardening protective lacquers harden through a conversion of matter. Preferred are one-component or two-component reactive systems, for example, which harden through mixing, through contact with ambient air or under the influence of energy-rich radiation such as UV radiation. Nevertheless non reactive lacquers are applicable within the scope of the present invention. Non reactive lacquers are typically cheap, easy to use and especially adequate for wet tissue packings which are not stored for a very long time or which contain a less aggressive solution.

In a preferred embodiment of the invention the sealing layer of the co-extrusion film consists mainly or wholly of polyethylene, polyethylene copolymer, an ionomer, polypropylene, a polypropylene-polyethylene-copolymer or a mixture of these polymers. When using polyethylene, it is preferable to use a type of polyethylene with low density, for example PE-LD, PE-VLD or PE-LLD or a polyethylene manufactured using Metallocen catalysers such as PE-LDm, PE-VLDm or PE-LLDm. Especially suited polyethylene copolymers are for example ethylene-vinyl acetate copolymers (EVA) and ethylene acryl copolymer (e.g. EAA, EMA).

The outer layer which forms the outside surface of the bag is characterised by good imprintability and preferably consists mainly or wholly of a polypropylene homopolymer (PP-H), a polypropylene random copolymer, a polypropylene block copolymer or a mixture thereof. When selecting the polymers for the layers of at the least two-layer co-extrusion film it is important to take the different melting temperatures into account, since usually the outer layer is not to be melted on, when the sealing layer is sealed. Particularly preferable is an embodiment, in which the co-extrusion film consists wholly or mainly of polyolefins thus allowing simple recycling of the film. The co-extrusion film may contain some minor amounts of additives, as for example slip agents, processing aids, thermal stabilisers and anti-blocking agents. The percentage weight of these admixtures in relation to the co-extrusion film as a whole is usually below 3%. By using these admixtures the functional properties of the co-extrusion film can be precisely adapted to the requirements. In addition colour pigments for colouring the bag may also be provided in one layer or in several layers.

Within the framework of the invention the overall thickness of the co-extrusion film is typically more than 40 µm, preferably more than 60 µm and typically less than 120 µm, preferably less than 80 µm. As compared to known prior art compound films which are made from biaxially orientated polypropylene and polyethylene or polyethyleneterephthalate and polyethylene, the design of the film according to the invention as co-extrusion film, which preferably consists mainly or wholly of polyolefins, achieves improved tear resistance and improved resistance against perforation caused by repeated bending. Furthermore, with the co-extrusion film it is possible to vary layer construction and the selection of raw materials over a wide range allowing the stiffness and the running properties of the co-extrusion film to be adapted in many ways during a processing operation.

In an advantageous embodiment of the invention the bag comprises a tear-open tissue removal zone which is surrounded by a weakening line. The weakening line may, for example, be formed as a continuous linearly shaped material weakening and/or as an equidistantly interrupted, linearly shaped material weakening. The material weakening might be created for example by cutting, a local reduction of the film thickness and/or a local embrittlement or partially destruction of the polymeric structures. Advantageously the removal zone is arranged on the topside of the wet tissue packing and facilitates easy extraction of the wet tissues from the inside of the bag. In an advantageous embodiment of the invention the tissue removal zone is covered by adhesive film for resealing.

The co-extrusion film can consist of the sealing layer and the outer layer or may without any limitation comprise a core of one single layer or multiple layers. In a preferred embodiment of the invention the co-extrusion film comprises three layers, whereby a core layer is arranged between the sealing layer and the outer layer. The core layer may, for instance, be arranged to match the polymers of the sealing layer and the outer layer in such a way that high bonding strength is ensured. In contrast to the sealing layer, which must have good sealability, and the outer layer, which must allow easy imprinting, the properties of the core layer can be very flexibly adapted to many different requirements. With a three-layer co-extrusion film the thickness of the core layer is typically between 1/3 and 3/4 and preferably between 2/5 and 3/5 of the overall thickness of the co-extrusion film.

The design of the wet tissue packing according to the invention facilitates an optically pleasing appearance. Since the imprint is arranged directly on the outer surface of the bag and only covered by a thin layer of the protective lacquer, special printing effects such as pearl effects or 3D effects can be very eye catching. Moreover the outer surface of the bag may be embossed in addition to the imprint.

The invention will now be described with reference to a drawing depicting only one embodiment, in which
- **Fig. 1**: shows a wet tissue packing for wet tissues,
- **Fig. 2**: shows the construction of a multilayer imprinted co-extrusion film.

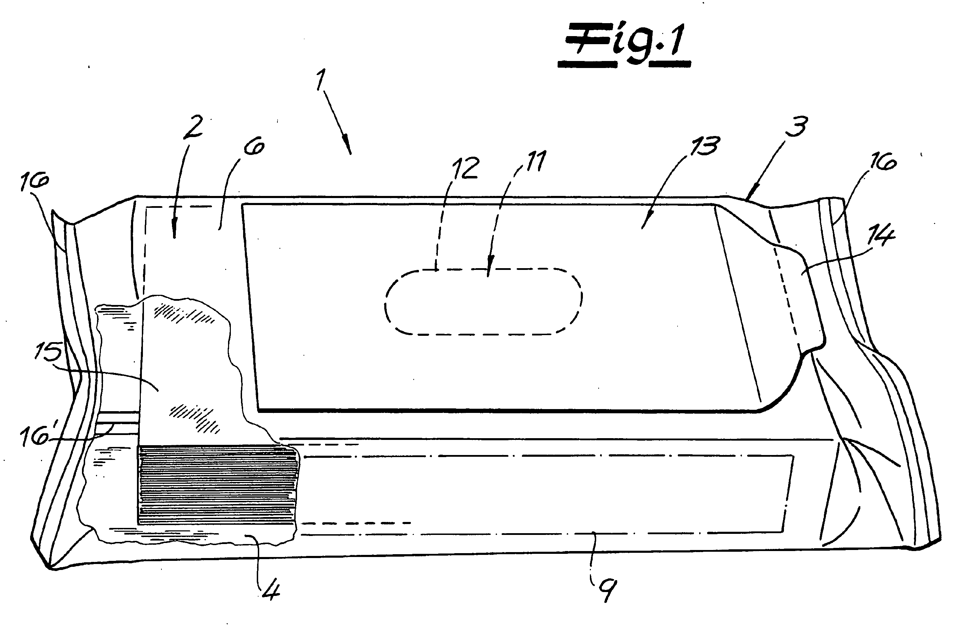

Fig. 1 shows a wet tissue packing 1 with an imprinted co-extrusion film 2 adapted to form a sealed bag 3. The inside surface 4 of the bag 3 is formed from a sealing layer 5 and the outside surface 6 is formed from an outer layer 7 of the co-extrusion film 2. Portions of the outer layer 7 of the co-extrusion film 2 are provided with an imprint 8, whereby the imprinted areas 9 are covered with a thin layer of a protective lacquer 10 which is preferably a reactively hardening protective lacquer. On the topside of the wet tissue packing 1 a tear-open tissue removal zone 11 of the bag 3 is provided which is surrounded by a weakening line 12. An adhesive film 13 for resealing covers the tissue removal zone 11 of the bag 3. The adhesive film 13 comprises a non-adhesive end portion 14 used for pulling the adhesive film 13 off the bag 3, whereby the tissue removal zone 11 is separated out along the weakening line 12 when the packing is opened for the first time. In order to reseal the wet tissue packing after extraction of a wet tissue 15 the adhesive film 13 is placed flat on the bag 3 again. The bag 3 is formed from a film portion by folding it up and sealed by two rim-side sealing seams 16 and one sealing seam 16' extending in longitudinal direction.

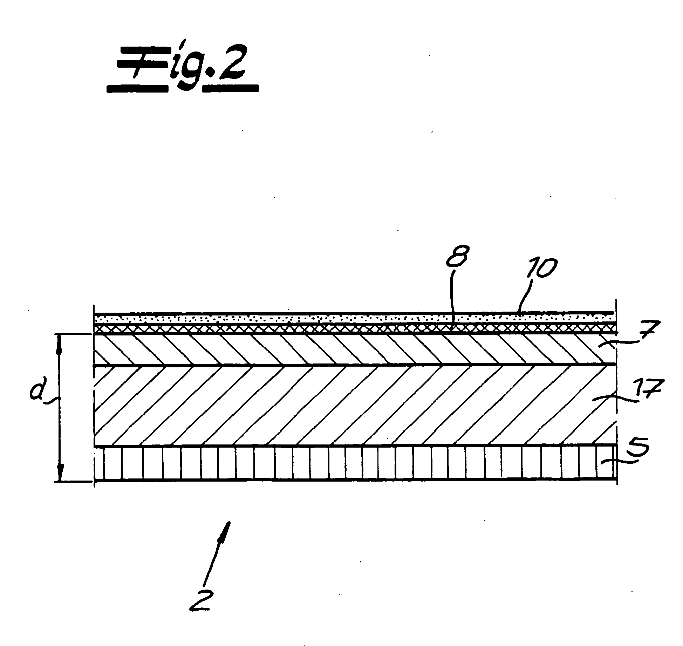

Fig. 2 depicts the construction of the co-extrusion film 2. The co-extrusion film 2 consists of three layers which form a sealing layer 5, a core layer 17 and an outer layer 7. The outer layer 7 which mainly or wholly consists of polypropylene homopolymer, polypropylene random copolymer, polypropylene block copolymer or a mixture thereof, carries an imprint 8 which is covered by a reactively hardening protective lacquer 10. The sealing layer 5 of the co-extrusion film 2 consists mainly or wholly of a polyethylene, a polyethylene copolymer, an ionomer, polypropylene, a polypropylene-polyethylene-copolymer or a mixture of these polymers. The polymers are chosen in such a way that the melting temperature of the sealing layer 5 is noticeably lower than that of the outer layer 7. The thickness of the core layer 17 lies between 1/3 and 3/4, preferably between 2/5 and 3/5 of the overall thickness of the co-extrusion film 2. The overall thickness d is typically more than 40 µm, preferably more than 60 µm and typically less than 120 µm, preferably less than 80 µm. Apart from admixtures from the group of internal lubricants, processing agents, thermal stabilisers, anti-blocking agents and colour pigments the entire co-extrusion film 2 consists of polyolefins.

In an actual embodiment of the co-extrusion film 2 the sealing layer 5 has a thickness of 15 µm with 25 percent by weight consisting of PE-LD and 75 percent by weight consisting of PE-VLDm. The core layer 17 has a thickness of 39 µm with 69 percent by weight consisting of PP-H and 20 percent by weight consisting of thermoplastic polyolefin elastomer, the rest consisting of colour pigments (white batch). The imprintable outer layer has a thickness of 16 µm with 70 percent by weight consisting of PP-H and 30 percent by weight consisting of polypropylene random copolymer. A tensile strength test was performed to ascertain the tensile strength of the previously unloaded co-extrusion film 2, its tensile strength at 5% elongation and at 10% elongation as well as the elongation at tear of the co-extrusion film 2 in running direction (MD) and in cross direction (CD). The tensile strength is given in Newton N per inch (25,4 millimetre) width of the 70 µm thick co-extrusion film 2. The stated elongation refers to the change in length of an initially 1 inch wide test strip of the co-extrusion film 2 compared to the overall length of the previously unloaded strip. The mechanical properties of the co-extrusion film 2 are shown in table 1. Apart from a good tensile strength the co-extrusion film 2 also exhibits very good properties when running through the machine. The shelf-life of the co-extrusion film 2 was checked by ascertaining its weight loss in an oven held at 40°. The weight loss measured at the beginning of storage was a mere 0.8 ‰ per day, meaning that the co-extrusion film has a good shelf life.

**Table 1**

| | | |
|---|---|---|
| Tensile strength MD | N/inch | 119 |
| Tensile strength CD | N/inch | 66 |
| Toughness at 5% elongation MD | N/inch | 31 |
| Toughness at 5% elongation CD | N/inch | 31 |
| Toughness at 10% elongation MD | N/inch | 39 |
| Toughness at 10% elongation CD | N/inch | 37 |
| Elongation at tear MD | % | 800 |
| Elongation at tear CD | % | 860 |

## Claims

1. A wet tissue packing used for wet tissues consisting of a multilayer printed film adapted to form a sealed bag, the inside surfaces (4) of the bag (3) being formed from a sealing layer (5) of the film and the outside surface (6) of the bag (3) being formed from an imprintable outer layer (7) of the film, whereby at least portions of the outer layer (7) are imprinted, **characterised in that** the film is a multilayer polyolefin film and formed by co-extrusion, and that the outer layer (7) is provided with a protective lacquer (10).

2. The wet tissue packing according to claim 1, **characterised in that** the bag (3) comprises a tear-open tissue removal zone (11), which is surrounded by a weakening line (12).

3. The wet tissue packing according to claim 2, **characterised in that** the wet tissue packing (1) comprises an adhesive film (13) for resealing, which covers the tissue removal zone (11) of the bag (3).

4. The wet tissue packing according to one of the claims 1 to 3, **characterised in that** the sealing layer (5) of the co-extrusion film (2) consists mainly or wholly of polyethylene, polyethylene copolymer or a mixture of these polymers.

5. The wet tissue packing according to one of the claims 1 to 4, **characterised in that** the outer layer (7) of the co-extrusion film (2) consists mainly or wholly of a polypropylene homopolymer (PP-H), a polypropylene random copolymer, a polypropylene block copolymer or a mixture thereof.

6. The wet tissue packing according to one of the claims 1 to 5, **characterised in that** the protective lacquer (10) is reactively hardening.

7. The wet tissue packing according to one of the claims 1 to 6, **characterised in that** the co-extrusion film (2) has an overall thickness of more than 40 µm, preferably more than 60 µm, and less than 120 µm, preferably less than 80 µm.

8. The wet tissue packing according to one of the claims 1 to 7, **characterised in that** the co-extrusion film (2) contains an admixture from the group of slip agents, processing aids, thermal stabilisers, anti-blocking agents and colour pigments.

9. The wet tissue packing according to one of the claims 1 to 8, **characterised in that** the co-extrusion film (2) comprises three layers, whereby the thickness of a core layer (17) is between 1/3 and 3/4 and preferably between 2/5 and 3/5 of the overall thickness (d) of the co-extrusion film (2).

## Patentansprüche

1. Feuchttuchverpackung, die für feuchte Tücher verwendet wird, bestehend aus einer mehrschichtigen bedruckten Folie, die geeignet ist, einen dicht verschlossenen Beutel zu bilden, wobei die Innenfläche (4) des Beutels (3) aus einer Siegelschicht (5) der Folie und die Außenfläche (6) des Beutels (3) aus einer bedruckbaren Außenschicht (7) bedruckt der Folie gebildet ist, wobei mindestens Teile der Außenschicht (7) bedruckt sind, **dadurch gekennzeichnet, dass** die Folie eine mehrschichtige Polyolefinfolie ist und durch Coextrusion gebildet ist und dass die Außenschicht (7) mit einem Schutzlack (10) versehen ist.

2. Feuchttuchverpackung nach Anspruch 1, **dadurch gekennzeichnet, dass** der Beutel (3) einen aufreißbaren Entnahmebereich (11) umfasst, der von einer Schwachungslinie (12) umgeben ist.

3. Feuchttuchverpackung nach Anspruch 2, **dadurch gekennzeichnet, dass** die Feuchttuchverpackung (1) eine Klebefolie (13) zum erneuten Verschließen umfasst, der den Entnahmebereich (11) des Beutels (3) bedeckt.

4. Feuchttuchverpackung nach einem der Ansprüche 1 bis 3, **dadurch gekennzeichnet, dass** die Siegelschicht (5) der Coextrusionsfolie (2) hauptsächlich oder vollständig aus Polyethylen, Polyethylen-Copolymer oder einer Mischung dieser Polymere besteht.

5. Feuchttuchverpackung nach einem der Ansprüche 1 bis 4, **dadurch gekennzeichnet, dass** die Außenschicht (7) der Coextrusionsfolie (2) hauptsächlich oder vollständig aus einem Polyethylenhomopolymer (PP-H), einem Polypropylen-Random-Copolymer, einem Polypropylen-Blockcopolymer oder einer Mischung davon besteht.

6. Feuchttuchverpackung nach einem der Ansprüche 1 bis 5, **dadurch gekennzeichnet, dass** der Schutzlack (10) reaktiv aushärtend ist.

7. Feuchttuchverpackung nach einem der Ansprüche 1 bis 6, **dadurch gekennzeichnet, dass** die Coextrusionsfolie (2) eine Gesamtdicke von mehr als 40 µm, bevorzugt mehr als 60 µm und weniger als 120 µm, bevorzugt weniger als 80 µm aufweist.

8. Feuchttuchverpackung nach einem der Ansprüche 1 bis 7, **dadurch gekennzeichnet, dass** die Coextrusionsfolie (2) eine Beimischung aus der Gruppe der Gleitmittel, Verarbeitungshilfsmittel, Wärmestabilisatoren, Antiblockmittel und Farbpigmente enthält.

9. Feuchttuchverpackung nach einem der Ansprüche 1 bis 8, **dadurch gekennzeichnet, dass** die Coextrusionsfolie (2) drei Schichten aufweist, wobei die Dicke einer Kernschicht (17) zwischen 1/3 und 3/4 und vorzugsweise zwischen 2/5 und 3/5 der Gesamtdicke (d) der Coextrusionsfolie (2) beträgt.

## Revendications

1. Boîte de lingettes utilisée pour les lingettes, constitué d'un film multicouche imprimé adapté pour former un sac étanche, les surfaces intérieures (4) du sac (3) étant composées d'une couche d'étanchéité (5) du film et la surface extérieure (6) du sac (3) étant composée d'une couche externe imprimable (7) du film, moyennant quoi au moins des parties de la couche externe (7) sont imprimées, **caractérisé en ce que** le film est un film polyoléfine multicouche formé par coextrusion et **en ce que** la couche externe (7) est enduite d'un vernis de protection (10).

2. Boîte de lingettes selon la revendication 1, **caractérisé en ce que** le sac (3) comprend une zone de retrait des lingettes à ouverture déchirable (11) entourée d'une ligne d'affaiblissement (12).

3. Boîte de lingettes selon la revendication 2, **caractérisé en ce que** la boîte pour lingettes (1) comprend un film adhésif (13) pour la refermeture, qui recouvre la zone de retrait des lingettes (11) du sac (3).

4. Boîte de lingettes selon l'une des revendications 1 à 3, **caractérisé en ce que** la couche d'étanchéité (5) du film de coextrusion (2) est principalement ou entièrement constituée de polyéthylène, de copolymère de polyéthylène ou d'un mélange de ces polymères.

5. Boîte de lingettes selon l'une des revendications 1 à 4, **caractérisé en ce que** la couche externe (7) du film de coextrusion (2) est principalement ou entièrement constituée d'un homopolymère de polypropylène (PP-H), d'un copolymère aléatoire de polypropylène, d'un copolymère séquencé de polypropylène ou d'un mélange de ceux-ci.

6. Boîte de lingettes selon l'une des revendications 1 à 5, **caractérisé en ce que** le vernis de protection (10) est à durcissement réactif.

7. Boîte de lingettes selon l'une des revendications 1 à 6, **caractérisé en ce que** le film de coextrusion (2) a une épaisseur totale de plus de 40 µm, de préférence de plus de 60 µm, et de moins de 120 µm, de préférence de moins de 80 µm.

8. Boîte de lingettes selon l'une des revendications 1 à 7, **caractérisé en ce que** le film de coextrusion (2) contient un mélange du groupe des agents de glissance, des adjuvants de fabrication, des stabilisants thermiques, des agents anti-adhérents et des pigments colorés.

9. Boîte de lingettes selon l'une des revendications 1 à 8, **caractérisé en ce que** le film de coextrusion (2) comprend trois couches, moyennant quoi l'épaisseur d'une couche centrale (17) est comprise entre 1/3 et 3/4 et de préférence entre 2/5 et 3/5 de l'épaisseur totale (d) du film de coextrusion (2).
